# EUROPÄISCHE PATENTSCHRIFT

(11) **EP 3 606 689 B1**
(45) Veröffentlichungstag und Bekanntmachung des Hinweises auf die Patenterteilung: **03.03.2021**
(21) Anmeldenummer: 18714196.5
(22) Anmeldetag: 22.03.2018
(51) Int. Cl.: B21J 15/32

(54) **VERFAHREN ZUM VERSORGEN EINER NIETMASCHINE MIT NIETELEMENTEN**
METHOD FOR SUPPLYING A RIVETING MACHINE WITH RIVET ELEMENTS
PROCÉDÉ D'ALIMENTATION EN RIVETS D'UNE RIVEUSE

(30) Priorität: 03.04.2017 DE 102017107156; 12.05.2017 DE 102017110401; 05.07.2017 DE 102017114972
(43) Veröffentlichungstag der Anmeldung: 12.02.2020
(73) Patentinhaber: Broetje-Automation GmbH, 26180 Rastede (DE)
(72) Erfinder: EUSTERWIEMANN, Christoph, 26121 Oldenburg (DE)
(74) Vertreter: Gottschald Patentanwälte Partnerschaft mbB
(86) Internationale Anmeldenummer: PCT/EP2018/057273
(87) Internationale Veröffentlichungsnummer: WO 2018/184856

(56) Entgegenhaltungen:
- WO-A1-2017/194760
- CN-A- 105 127 352

## Beschreibung

Die Erfindung betrifft ein Verfahren zum Versorgen einer Nietmaschine mit Nietelementen gemäß Anspruch 1, ein Verfahren zur Herstellung eines Strukturbauteils gemäß Anspruch 12 sowie eine Fertigungsvorrichtung gemäß Anspruch 13.

Aus der CN 105127352 A ist die Handhabung von Nietelementen mittels eines Roboters bekannt. Dort werden die Nietelemente von einer Nietbereitstellungseinheit zu einem sich vor einer Nietpresse befindlichen Werkstück roboterbasiert transportiert.

Ferner ist es aus dem Stand der Technik bekannt, dass Nietelemente zum Befüllen einer Nietkassette von einer als Vibrationswendelförderer ausgebildeten Nietelementbereitstellungseinheit vereinzelt, ihre Ausrichtung geprüft und die Nietelemente dann einer Nietkassette zugeführt werden. Eine befüllte Nietkassette wird anschließend einem Nietmagazin einer Fertigungsvorrichtung zugeführt, von wo aus die Nietmaschine der Fertigungsvorrichtung mit Nietelementen versorgt wird.

Das Befüllen der Nietkassetten ist relativ aufwendig und erfolgt hier sequentiell. Wird die Art eines Nietelements, welches in die Nietkassetten gefüllt werden soll, geändert, muss die Nietbeladeeinrichtung auf die neuen Nietelemente eingestellt werden. Das Konzept der Bereitstellung der Nietelemente in Nietmagazinen erfordert eine umfangreiche Vorausplanung und Lagerung von Nietkassetten mit verschiedensten Nietelementen.

Der vorliegenden Erfindung liegt somit die Aufgabe zugrunde, ein einfaches und flexibles Versorgen einer Nietmaschine mit den benötigten Nietelementen zu ermöglichen.

Gelöst wird diese Aufgabe verfahrensmäßig mit den Merkmalen von Anspruch 1.

Mit dem vorschlagsgemäßen Verfahren kann eine Nietmaschine besonders einfach mit Nietelementen versorgt werden. Hierfür ist mindestens eine Nietelementbereitstellungsanordnung mit mindestens einer Nietelementbereitstellungseinheit zur Bereitstellung und zur Vereinzelung der Nietelemente vorgesehen. Die Nietmaschine weist eine Nietelementaufnahmeanordnung mit mindestens einer Nietelementaufnahme zur Aufnahme der Nietelemente auf. Dadurch, dass zumindest ein Teil des Transports von einer der Nietelementbereitstellungseinheiten zu einer der Nietelementaufnahmen roboterbasiert erfolgt, wird eine besonders einfache und flexible Versorgung der Nietmaschine mit Nietelementen ermöglicht. Die Nietmaschine kann direkt mit Nietelementen in Form von Schüttgut und somit magazinlos versorgt werden.

In den Weiterbildungen der Ansprüche 2 bis 4 werden bevorzugte Ausgestaltungen eines Roboters zum Transport der Nietelemente, der Nietmaschine sowie der Nietelementbereitstellungseinheit und deren bevorzugte Einbindung in das vorschlagsgemäße Verfahren beschrieben.

Eine besonders bevorzugte Weiterbildung des Verfahrens ist in Anspruch 5 beschrieben, welche ein besonders einfaches Zuführen eines Nietelements zum Abgreifbereich ermöglicht.

Der Anspruch 6 beschreibt einen bevorzugten Transport der Nietelemente von der Nietelementaufhahmeanordnung zum Endeffektor.

Bevorzugte Formen der Steuerung der Versorgung der Nietmaschine mit Nietelementen sind in Anspruch 7 beschrieben. Sie ermöglichen ein besonders flexibles Versorgen der Nietmaschine auch mit unterschiedlichen Nietelementen.

Gemäß den Ansprüchen 8 bis 11 kann die Steuerung mittels einer Sensoranordnung ein von der Nietelementbereitstellungseinheit bereitgestelltes Nietelement erfassen bzw. prüfen.

Darüber hinaus wird die eingangs beschriebene Aufgabe bei einem Verfahren zur Herstellung eines Strukturbauteils durch die Merkmale von Anspruch 12 gelöst.

Dabei wird eine Nietmaschine wie zuvor beschrieben mit Nietelementen versorgt, wobei von der Nietelementaufnahmeanordnung die Nietelemente einem Endeffektor der Nietmaschine zugeführt werden und in das Strukturbauteil ein Loch gebohrt und ein dem Endeffektor zugeführtes Nietelement in das Loch eingesetzt und genietet wird. Es ergeben sich die gleichen Vorteile wie zuvor bereits im Zusammenhang mit dem Verfahren zum Versorgen einer Nietmaschine mit Nietelementen beschrieben.

Zudem wird die eingangs genannte Aufgabe durch eine Fertigungsvorrichtung gemäß Anspruch 13 gelöst.

Die Fertigungsvorrichtung ist zur Durchführung der zuvor beschriebenen Verfahren eingerichtet. Insofern wird diesbezüglich auf die vorstehend beschriebenen Merkmale der Verfahren verwiesen.

Bevorzugte Ausgestaltungen der Fertigungsvorrichtung, insbesondere betreffend den Roboter, die Nietmaschine mit der ihr zugeordneten Nietelementaufnahmeanordnung sowie die Nietelementbereitstellungseinheit sind in den Ansprüchen 13 bis 19 beschrieben.

Im Folgenden wird die Erfindung anhand einer lediglich ein Ausführungsbeispiel darstellenden Zeichnung näher erläutert. In der Zeichnung zeigt
- Fig. 1: eine schematische Darstellung eines ersten Ausführungsbeispiels einer vorschlagsgemäßen Fertigungsvorrichtung zur Durchführung eines vorschlagsgemäßen Verfahrens, in a) einer Seitenansicht und b) einer Draufsicht,
- Fig. 2: eine schematische Darstellung eines weiteren Ausführungsbeispiels einer vorschlagsgemäßen Fertigungsvorrichtung zur Durchführung eines vorschlagsgemäßen Verfahrens, in a) einer Seitenansicht und b) einer Draufsicht,
- Fig. 3: eine dreidimensionale Darstellung eines Teils der vorschlagsgemäßen Fertigungsvorrichtung gemäß Blickrichtung III aus Fig. 2,
- Fig. 4: in a) eine dreidimensionale Darstellung eines Teils der vorschlagsgemäßen Fertigungsvorrichtung gemäß Blickrichtung IV aus Fig. 2 und in b) einen Schnitt gemäß A-A aus Fig. 4a),
- Fig. 5: eine schematische Darstellung eines weiteren Ausführungsbeispiels einer vorschlagsgemäßen Nietbeladestation zur Durchführung eines vorschlagsgemäßen Verfahrens a) in einer Seitenansicht und b) in einer perspektivischen Ansicht und

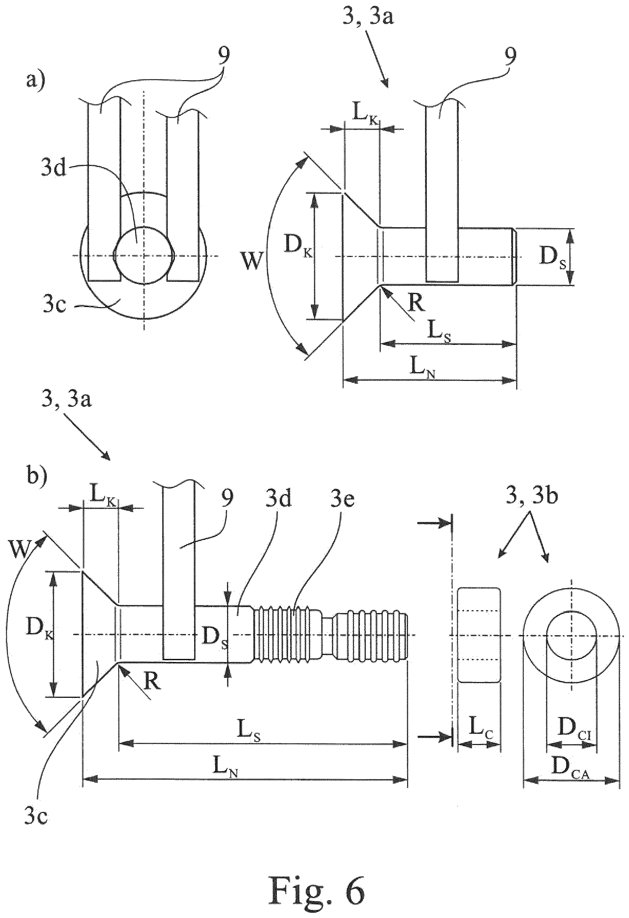

- Fig. 6: beispielhaft von einem Greifer eines Roboters der Fertigungsvorrichtung aus Fig. 1 gegriffene Nietelemente.

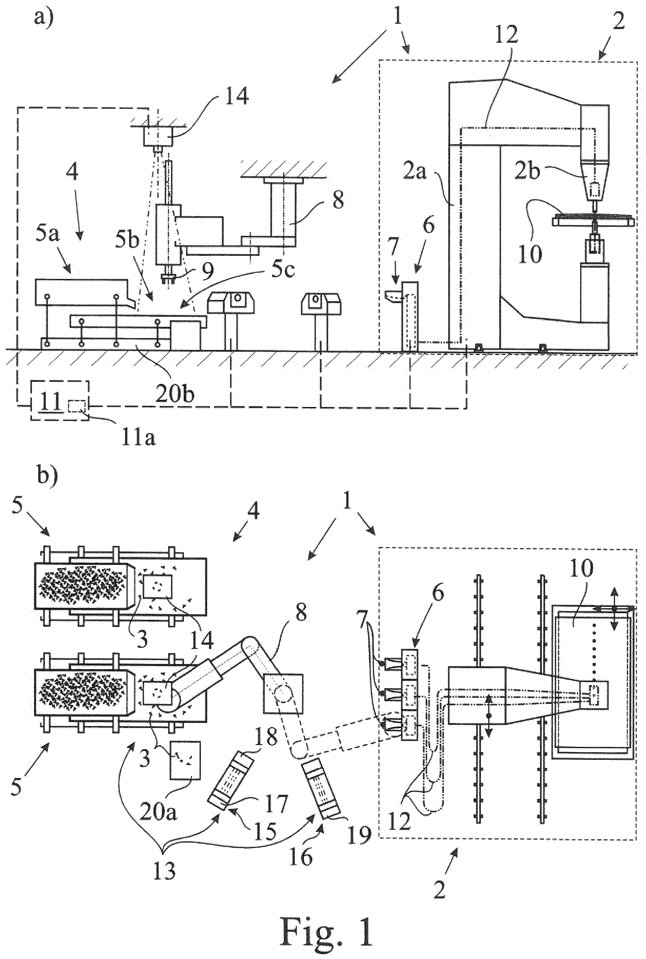

In der Fig. 1 ist eine vorschlagsgemäße Fertigungsvorrichtung 1 gezeigt. Die Fertigungsvorrichtung 1 weist eine Nietmaschine 2 auf, welche mittels des vorgeschlagenen Verfahrens mit Nietelementen 3, insbesondere während des Betriebs der Nietmaschine 2, versorgt wird.

Ferner ist eine Nietelementbereitstellungsanordnung 4 mit mindestens einer Nietelementbereitstellungseinheit 5 zur Bereitstellung und zur Vereinzelung der Nietelemente 3 vorgesehen. Hier ist die Nietelementbereitstellungseinheit 5 bzw. sind die Nietelementbereitstellungseinheiten 5 separat zur Nietmaschine 2 aufgestellt. Alternativ kann bzw. können diese an der Nietmaschine 2 befestigt und somit Teil der Nietmaschine 2 sein.

Die Nietmaschine 2 weist eine Nietelementaufhahmeanordnung 6 mit mindestens einer Nietelementaufnahme 7 zur Aufnahme der Nietelemente 3 auf. In der Nietelementaufnahme 7 bzw. den Nietelementaufnahmen 7 werden die Nietelemente 3 hier und vorzugsweise ausgerichtet, insbesondere lagegesichert, aufgenommen.

Hier und vorzugsweise ist die Nietelementaufnahmeanordnung 6 an der Nietmaschine 2, insbesondere an einem ortsfesten Teil der Nietmaschine 2, befestigt.

Vorschlagsgemäß erfolgt ein Teil des Transports von einer der Nietelementbereitstellungseinheiten 5 zu einer der Nietelementaufnahmen 7 roboterbasiert. Der roboterbasierte Transport erfolgt hier mittels eines Roboters 8. Der Roboter 8 und die Nietelementbereitstellungseinheit 5 sind hier und vorzugsweise einer Nietelementversorgungseinheit zugeordnet, welche diese aufweist.

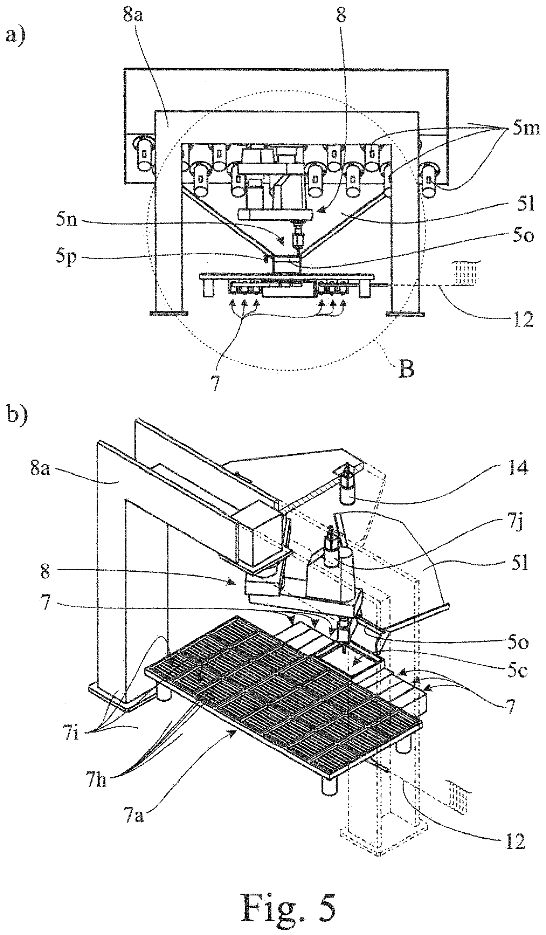

Bei dem Roboter 8 handelt es sich hier und vorzugsweise um einen Roboter 8 mit mindestens zwei oder mindestens drei Achsen. Der Roboter 8 kann auch vier oder mehr Achsen aufweisen. Besonders bevorzugt weist der Roboter 8 mindestens zwei oder mindestens drei Rotationsachsen auf. Besonders bevorzugt handelt es sich bei dem Roboter 8 um einen Industrieroboter, insbesondere einen Scara-Roboter (Selective Compliance Assembly Robot Arm). Er wird auch als "horizontaler Gelenkarmroboter" bezeichnet. Hier und vorzugsweise ist der Roboter 8 separat zur Nietmaschine 2 aufgestellt. Alternativ kann der Roboter 8 jedoch auch an der Nietmaschine 2 befestigt und somit Teil der Nietmaschine 2 sein. Im Ausführungsbeispiel der Fig. 5 ist der Roboter 8 hängend an einem, insbesondere feststehenden, Portal 8a befestigt.

Dadurch, dass ein Roboter 8 die Nietelemente 3 hier und vorzugsweise aus der Nietelementbereitstellungseinheit 5 entnimmt und einer der Nietelementaufnahmen 7 zuführt, können viele verschiedene Nietelemente 3 auf einfache Art und Weise gehandhabt und der Nietelementaufnahme 7 bzw. den Nietelementaufnahmen 7 zugeführt werden.

Bei den Nietelementen 3 kann es sich beispielsweise um Nieten 3a und/oder Nietcollare 3b und/oder Spacer 3c handeln.

Vorzugsweise können mit dem Roboter 8 Nieten 3a unterschiedlicher Gattung, insbesondere unterschiedlichen Typs, und/oder unterschiedlicher Nennlänge und/oder unterschiedlichen Nenndurchmessers ohne Veränderung der mechanischen Konfiguration der Fertigungsvorrichtung 1 einer der bzw. den Nietelementaufnahmen 7 zugeführt werden. Der Typ eines Nietelements 3 unterscheidet sich insofern von dessen Gattung, als dass die Gattung die Art des Nietes, Nietcollars, und/oder Spacers bestimmt, sich hinsichtlich der Dimension seiner Merkmale, insbesondere hinsichtlich seiner Nennmaße, jedoch nicht festlegt. Der Typ eines Nietelements 3 spezifiziert nicht nur die Gattung, sondern auch die Nennmaße des Nietelements 3, also insbesondere den Nenndurchmesser und die Nennlänge.

Zusätzlich oder alternativ können Nietcollare 3b unterschiedlicher Gattung, insbesondere unterschiedlichen Typs, und/oder unterschiedlicher Nennlänge und/oder unterschiedlichen Nenndurchmessers durch den Roboter ohne Veränderung der mechanischen Konfiguration der Fertigungsvorrichtung 1 einer der bzw. den Nietelementaufhahmen 7 zugeführt werden.

Es ist vorzugsweise also auch möglich, Nieten 3a und Nietkollare 3b durch den Roboter 8 ohne Veränderung der mechanischen Konfiguration der Fertigungsvorrichtung 1 einer der bzw. den Nietelementaufnahmen 7 zuzuführen.

Das gleiche gilt hier und vorzugsweise auch für Spacer 3c. Auch Spacer 3c unterschiedlicher Gattung, insbesondere unterschiedlichen Typs, und/oder unterschiedlicher Nennlänge und/oder unterschiedlichen Nenndurchmessers können durch den Roboter 8 ohne Veränderung der mechanischen Konfiguration der Fertigungsvorrichtung 1 einer der bzw. den Nietelementaufnahmen 7 zugeführt werden.

Erreicht wird dies durch den Einsatz des Roboters 8. Dieser kann mit seinem Greifer 9, insbesondere einem Zweifinger-Greifer, die Nietelemente 3 verschiedenster Ausgestaltung greifen und sicher und ausgerichtet, insbesondere lagedefiniert, den Nietelementaufnahmen 7 zuführen. Insbesondere können alle der Nietelementaufnahmeanordnung 6 zugeführten Nietelemente 3 vom Roboter 8 aufgenommen, ausgerichtet und der Nietelementaufnahmeanordnung 6 zugeführt werden. Es können also vorzugsweise alle Nietelemente 3 auf dem Transportweg von einer der Nietelementbereitstellungseinheiten 5 zur jeweiligen Nietelementaufnahme 7 ausgerichtet werden. Ihre Ausrichtung muss nicht vor der Aufnahme in die Nietelementaufnahme 7 geprüft werden und im Falle einer Falschausrichtung müssen diese somit auch nicht gedreht oder erneut der Nietelementbereitstellungseinheit 5 zugeführt werden.

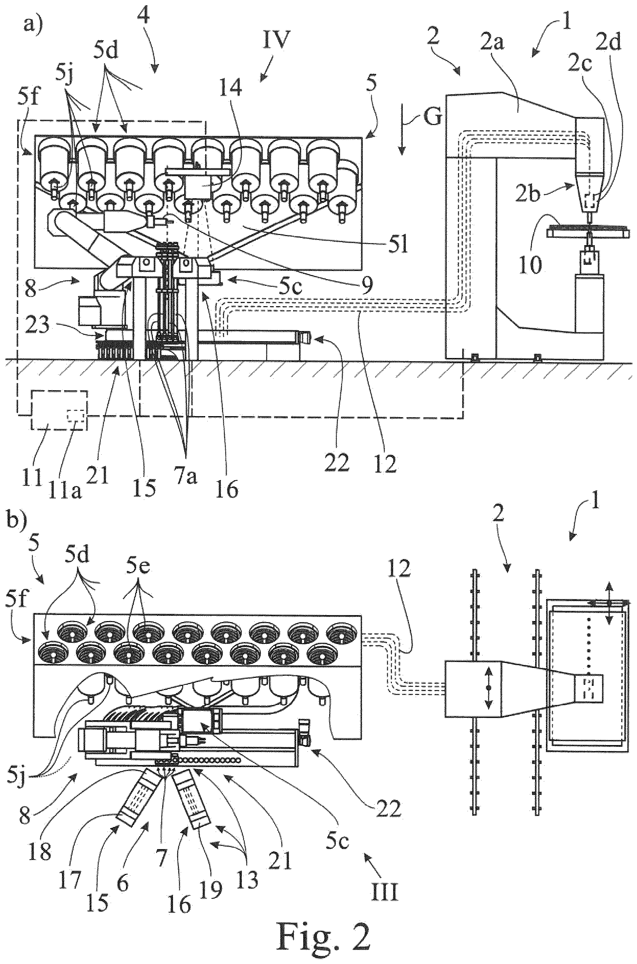

Wie in der Fig. 1 und 2 gezeigt weist hier und vorzugsweise die Nietmaschine 2 eine Verstelleinheit 2a mit einem Endeffektor 2b auf. Der Endeffektor 2b weist ein Nietwerkzeug zum Setzen von Nietelementen 3 in ein Strukturbauteil 10 und ggf. ein Bohrwerkzeug zum Bohren eines Lochs in ein Strukturbauteil 10 auf. Bei dem Strukturbauteil 10 kann es sich insbesondere um ein Flugzeugstrukturbauteil, beispielsweise eine Rumpfsektion und oder eine Außenhautsektion handeln. In ein von dem Bohrwerkzeug gebohrtes Loch kann das Nietwerkzeug dann ein Nietelement 3 einsetzen.

Zur Steuerung 11 der Versorgung der Nietmaschine 2 mit Nietelementen 3 ist ferner eine Steuerung 11 vorgesehen. Die Steuerung 11 kann dabei zentral oder dezentral ausgebildet sein, also entweder eine zentrale Steuereinheit aufweisen oder mehrere dezentrale Steuereinheiten aufweisen. Die Steuerung 11 steuert hier und vorzugsweise die Nietelementbereitstellungsanordnung 4 und den Roboter 8 sowie ggf. die Nietelementaufhahmeanordnung 6 und/oder die Nietmaschine 2.

Zur Bereitstellung der Nietelemente 3 ist die Nietelementbereitstellungseinheit 5 hier als Vereinzelungseinheit ausgebildet. Der Nietelementbereitstellungseinheit 5 werden die Nietelemente 3 vorzugsweise als Schüttgut zugeführt, vorzugsweise aus einer Umverpackung. Von der Steuerung 11 können Informationen über die Nietelemente 3, insbesondere mit der Umverpackung verbundene Informationen über die Nietelemente 3, erfasst werden. Hierbei kann es sich beispielsweise um den Typ der Nietelemente 3 und/oder geometrische Sollabmaße und/oder Chargeninformationen handeln. Insofern umfassen die Informationen über die Nietelemente 3 vorzugsweise Spezifikationen der Nietelemente 3. Die Erfassung dieser Informationen kann beispielsweise mittels eines Barcode-Scanners und/oder eines RFID-Lesegeräts erfolgen. Darüber hinaus ist jedoch auch eine manuelle Eingabe und/oder Auswahl durch einen Bediener möglich.

Auf diese Weise können Sollinformationen, insbesondere Nennmaße der Nietelemente und ggf. chargenspezifische Toleranzbereiche, festgestellt werden, auf welche die Nietelemente 3 geprüft werden können.

Die Nietelementbereitstellungseinheit 5 in den Ausführungsbeispielen der Fig. 1 und 2 weist einen Bevorratungsbereich 5a zur Aufnahme und Bevorratung von Nietelementen 3 auf. Sodann ist hier und vorzugsweise ein Vereinzelungsbereich 5b zur Vereinzelung der Nietelemente 3 und ein Abgreifbereich 5c in der Nietelementbereitstellungseinheit 5 vorgesehen. Im Ausführungsbeispiel der Fig. 1 gehen der Vereinzelungsbereich und der Abgreifbereich 5c fließend ineinander über. Im Abgreifbereich 5c sind die Nietelemente 3 hier und vorzugsweise zum Abgreifen durch den Roboter 8 chaotisch aber vereinzelt angeordnet.

Im Ausführungsbeispiel der Fig. 1 schüttet die Nietelementbereitstellungseinheit 5, insbesondere durch Rüttelbewegungen, zur Bereitstellung von Nietelementen 3 einige Nietelemente 3 aus dem Bevorratungsbereich 5a in den Vereinzelungsbereich 5b, von wo die Nietelemente 3, insbesondere durch Rüttelbewegungen, vereinzelt und dem Abgreifbereich 5c zugeführt werden. Aus dem Abgreifbereich 5c werden die Nietelemente 3 dann roboterbasiert, also insbesondere durch den Roboter 8, abgegriffen.

Im Ausführungsbeispiel der Fig. 2 bis 4 und in dem Ausführungsbeispiel der Fig. 5 weist die Nietelementbereitstellungseinheit 5 einen Wendelförderer 5d auf, mittels welchem die Nietelemente 3 einem Abgreifbereich 5c zugeführt werden.

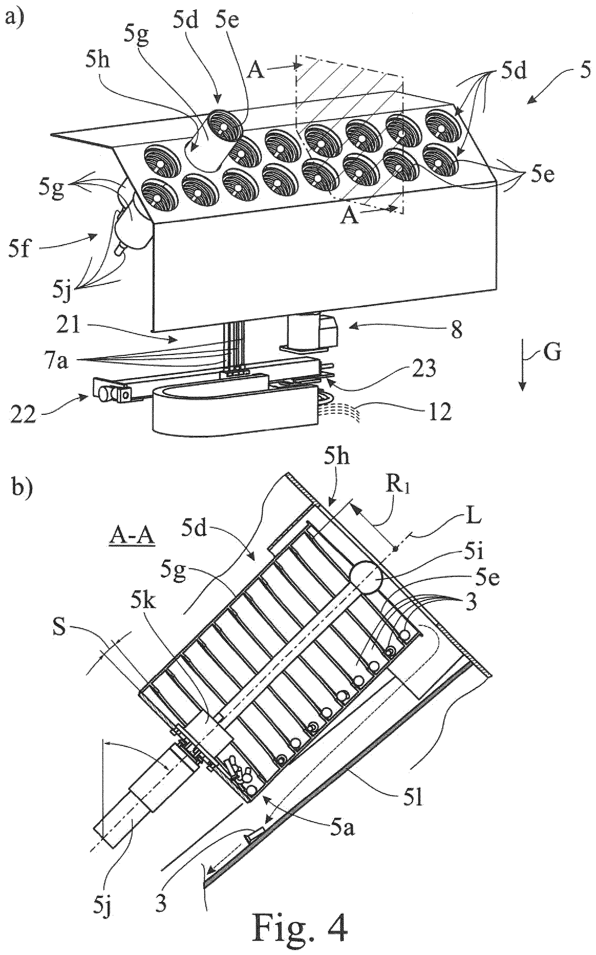

Der Wendelförderer 5d hat eine Wendel 5e und eine Längsachse L, um welche sich die Wendel 5e erstreckt. Im normalbetriebsgemäßen Gebrauch ist der Wendelförderer 5d derart angeordnet, dass die Längsachse L wie in den Figuren 2 und 4 gezeigt zur Schwerkraftrichtung G geneigt ist.

Insbesondere um Nietelemente 3 unterschiedlichsten Typs und/oder unterschiedlichster Gattung bereitzustellen, kann die Nietelementbereitstellungseinheit 5 mehrere Wendelförderer 5d aufweisen, wie dies auch in dem Ausführungsbeispiel der Fig. 2 bis 4 bzw. dem Ausführungsbeispiel der Fig. 5 der Fall ist. Sind mehrere Wendelförderer 5d vorgesehen, bilden diese eine Wendelfördereranordnung 5f. Auch bei den weiteren Wendelförderem 5d erstreckt sich deren Wendel 5e vorzugsweise um ihre jeweilige Längsachse L. Dabei sind vorzugsweise die Längsachsen L mindestens zweier, vorzugsweise aller Wendelförderer zur Schwerkraftrichtung G geneigt. Hier sind, wie in der Fig. 2 bzw. 4 gut zu erkennen, die Längsachsen L der Wendelförderer 5d im Wesentlichen parallel zueinander ausgerichtet Es ergibt sich eine ganz besonders kompakte Anordnung. Besonders bevorzugt sind die Wendelförderer 5d einer Nietelementbereitstellungseinheit 5 im Wesentlichen baugleich ausgebildet.

Die Längsachse L bzw. die Längsachsen L verlaufen vorzugsweise in einem Winkel von 15° bis 75°, weiter vorzugsweise von 30° bis 60°, weiter vorzugsweise von 40° bis 50°, zu der Schwerkraftrichtung G.

Der Steigungswinkel S der Wendel 5e beträgt hier und vorzugsweise unter 20°, weiter vorzugsweise unter 10°. Besonders bevorzugt beträgt der Steigungswinkel zwischen 2,5° und 7,5°. Im Ausführungsbeispiel sind es 5°.

Der Roboter 8 transportiert die Nietelemente 3 von dem Abgreifbereich 5c zu der Nietelementaufnahme 7. Die Nietelementversorgungseinheit kann die Nietelemente 3 so besonders flexibel einer Nietelementaufnahme 7, insbesondere ausgerichtet, zuführen. Wie im Ausführungsbeispiel gezeigt können auch mehrere Nietelementaufnahmen 7 vorgesehen sein. Diese bilden dann eine Nietelementaufnahmeanordnung 6.

Die Kombination der Nietbereitstellungseinheit 5 mit einem Wendelförderer 5d in Verbindung mit einem Roboter 8 ermöglicht ein besonders flexibles Zuführen von Nietelementen 3 zu einer Nietelementaufnahme 7. Der Wendelförderer 5d ermöglicht ein ganz besonderes einfaches Vereinzeln und Zuführen zum Abgreifbereich 5c während der Roboter 8 die Nietelemente 3, insbesondere unterschiedlichster Gattung oder unterschiedlichsten Typs, dann der Nietelementaufnahme 7 ausgerichtet zuführen kann. Die Nietelementaufnahme 7 kann diese dann ausgerichtet, insbesondere lagegesichert, aufnehmen. Eine mechanische Konfigurationsänderung der Nietelementversorgungseinheit zur Adaption an andere Nietelemente 3 ist nicht notwendig.

Eine vergrößerte Darstellung eines Wendelförderers 5d kann der Fig. 4b gemäß dem Schnitt A-A entnommen werden. Der Wendelförderer 5d weist einen Wendeltopf 5g zur Aufnahme von Nietelementen 3 auf. In diesem ist die Wendel 5e angeordnet. Der Wendeltopf 5g ist hier und vorzugsweise im Wesentlichen zylindrisch ausgebildet. Besonders bewährt hat es sich, wenn der Wendeltopf 5g und die Wendel 5e einstückig ausgebildet sind und/oder die Wendel 5e im Wesentlichen einen konstanten Radius R₁ aufweist, wie dies im Ausführungsbeispiel der der Fig. 4 gezeigt ist.

Der Wendeltopf 5g ermöglicht es, dem Wendelförderer 5d Nietelemente 3 in Form von Schüttgut zuzuführen. Dieses kann dann im Bodenbereich des Wendelförderers 5d bevorratet - Bevorratungsbereich 5a - wird. Durch die Rotation der Wendel 5e können die Nietelemente 3 von der Wendel 5e aus dem Bevorratungsbereich in Richtung Einlassöffnung des Wendelförderers 5d transportiert werden. Dabei gleiten die Nietelemente 3 auf der Wendel 5e ab. Zudem werden die Nietelemente 3 hierbei auf der Wendel 5e, zumindest in Gruppen, vereinzelt.

Wie in der Fig. 4a gezeigt, weist der Wendelförderer 5d eine Wendeltopfaufnahme 5h zur Aufnahme des Wendeltopfes 5g auf. Hier und vorzugsweise ist der Wendeltopf 5g, insbesondere werkzeuglos, lösbar in der Wendeltopfaufnahme 5h angeordnet. Hier kann er einfach, wie in der Fig. 4 gezeigt, in die Wendeltopfaufnahme 5h eingesteckt bzw. herausgezogen werden. Dies ermöglicht ein besonders einfaches Nachfüllen von Nietelementen 3. Der Wendeltopf 5g kann einfach entnommen und dann mit Nietelementen 3 befüllt werden. Danach kann er wieder in die Wendeltopfaufnahme 5h eingesetzt werden. Alternativ kann der Wendeltopf 5g auch gegen einen weiteren, bereits befüllten Wendeltopf 5g getauscht werden. Dies ermöglicht ein noch zügigeres Nachfüllen der Nietbereitstellungseinheit 5 mit Nietelementen 3.

Ferner kann der Wendelförderer 5d, vorzugsweise eine Wendeltopfaufnahme 5h, weiter vorzugsweise die Mehrheit der Wendeltopfaufnahmen 5h, weiter vorzugsweise jede Wendeltopfaufnahme 5h, einen Wendeltopfsensor 5m aufweisen, welcher erkennt, ob ein Wendeltopf 5g aufgenommen ist und/oder welche Nietelemente 3 sich im Wendeltopf 5g befinden. Diese Erkennung erfolgt hier und vorzugsweise über eine Kennzeichnung des Wendeltopfes 5g, welche der Wendeltopfsensor 5m sensiert. Hierbei kann es sich beispielsweise um einen Barcode, QR-Code und/oder einen RFID-Chip handeln.

Um das Entnehmen des Wendeltopfes 5g zu erleichtern, weist der Wendeltopf 5g einen Griff zum Greifen und Herausnehmen des Wendeltopfes 5g aus bzw. Einführen des Wendeltopfes 5g in die Wendeltopfaufnahme 5h auf. Hier ist der Griff 5i auf der Längsachse L des Wendelförderers 5d im Wendeltopf 5g angeordnet. Er ist als Kugelkopf ausgestaltet.

Zur Übertragung einer Drehbewegung von einem Antrieb 5j auf den Wendeltopf 5g bzw. die Wendeltöpfe 5g kann eine Kupplung 5k vorgesehen sein. Bei der Kupplung 5k handelt es sich hier und vorzugsweise um eine Klauenkupplung, welche insbesondere auch als Steckkupplung ausgebildet ist. Hierzu weist der Wendeltopf 5g eine Klaueneinheit und die Wendeltopfaufnahme 5h eine korrespondierende Klaueneinheit der Kupplung 5k auf.

Hier und vorzugsweise weist jeder Wendelförderer 5d einen eigenen Antrieb 5j auf. Entsprechend können sämtliche Wendelförderer 5d hier und vorzugsweise einzeln angesteuert und angetrieben werden. Alternativ ist es jedoch auch denkbar, dass ein Antrieb 5j für mehrere Wendelförderer 5d vorgesehen ist. In diesem Fall kann die Antriebskraft eines Antriebs 5j beispielsweise mittels eines Riemens, Zahnriemens o. dgl. vom Antrieb auf mehrere Wendelförderer 5d übertragen werden.

Durch das Antreiben des Wendeltopfes 5g wird auch die Wendel 5e gedreht. Das Drehen der Wendel 5e bewirkt, dass die Nietelemente 3 aus dem Bevorratungsbereich 5a des Wendeltopfes 5g durch die Wendel 5e in Richtung der Öffnung des Wendeltopfes 5g gefördert werden. Hier und vorzugsweise befindet sich die Öffnung des Wendeltopfes 5g auf der oberen Stirnseite desselben. Auf dem Förderweg im Wendeltopf 5g werden die Nietelemente 3, insbesondere in kleine Gruppen, vereinzelt. Hierdurch ist durch Drehen des Wendeltopfes 5g ein insbesondere einzelnes Abwerfen der Nietelemente 3, hier und vorzugsweise über eine Abwurfkante des Wendeltopfes 5g, aus dem Wendeltopf 5g möglich.

Hier, und wie insbesondere in der Fig. 4 zu sehen, werden die Nietelemente 3 durch die Wendel 5e aus dem Wendelförderer 5d gefördert. Hier weist die Wendeltopfaufhahme 5h eine Öffnung zum Zuführen der Nietelemente 3 zum Abgreifbereich 5c auf. Durch diese Öffnung fallen die Nietelemente 3 aus dem Wendelförderer 5d heraus. Hier und vorzugsweise ist dann eine Rutsche 51 vorgesehen, über welche die Nietelemente 3 zum Abgreifbereich 5c rutschen. Insofern wird durch eine Drehung der Wendel 5e ein Nietelement 5 vom Wendelförderer 5d durch das Abwerfen desselben und Rutschen 51 über die Rutsche 51 dem Abgreifbereich 5c zugeführt.

Wie beispielhaft in der Fig. 5 gezeigt, kann vor dem Abgreifbereich ein Nietelementsammelbereich 5n vorgesehen sein. In diesem können Nietelemente 3 vor dem Vereinzeln zum Abgreifen durch den Roboter 8 gesammelt werden, um diese gemeinsam dem Abgreifbereich 5c zuzuführen. Im Ausführungsbeispiel weist der Nietelementsammelbereich 5n eine Klappe 5o auf. Diese kann hier mittels eines Aktuators 5p betätigt werden. Hier weist die Rutsche 51 die Klappe 5o und den Aktuator 5p auf. Durch das Sammeln und gemeinsame Zuführen der Nietelemente 3 zum Abgreifbereich 5c können auf besonders einfache Art und Weise die Nietelemente 3 zügig dem Abgreifbereich 5c zugeführt und dort vereinzelt und abgegriffen werden. Das Sammeln der Nietelemente 3 erfolgt hier durch die geschlossene Klappe 5o und/oder das gemeinsame Zuführen der gesammelten Nietelemente 3 zum Abgreifbereich durch das Öffnen der Klappe 5o.

Vorzugsweise werden dem Abgreifbereich 5c Nietelemente 3 von mehreren, vorzugsweise allen Wendelförderern 5d, zugeführt. Hier und vorzugsweise werden die Nietelemente 3 über eine gemeinsame Rutsche 51 dem Abgreifbereich 5c zugeführt. Es können jedoch auch mehrere Rutschen 51 von verschiedenen Wendelförderern 5d zu dem Abgreifbereich 5c vorgesehen sein. Vorzugsweise fördern jedoch mehrere Wendelförderer 5d Nietelemente 3 zu dem Abgreifbereich 5c.

Zusätzlich oder alternativ zu der Öffnung der Wendeltopfaufnahme 5h kann auch der Wendeltopf 5g eine Öffnung zum Zuführen der Nietelemente 3 zum Abgreifbereich 5c aufweisen.

Der Abgreifbereich 5c wird hier und vorzugsweise von einem Rütteltisch gebildet. Dieser gewährleistet auch für den Fall, dass mehrere Nietelemente 3 gleichzeitig dem Abgreifbereich 5c zugeführt werden, ein sicheres Abgreifen durch den Roboter 8. Ggf. können im Abgreifbereich 5c nicht vereinzelte liegende Nietelemente 3 durch Rüttelbewegungen separiert bzw. weiter vereinzelt werden.

Vom Abgreifbereich werden die Nietelemente 3 mittels des Roboters 8, vorzugsweise einzeln, der Nietelementaufnahme 7 ausgerichtet, insbesondere lagegesichert, zugeführt und von der Nietelementaufnahme 7 ausgerichtet, vorzugsweise lagegesichert aufgenommen. Es kann nur eine Nietelementaufnahme 7 vorgesehen sein, vorzugsweise sind jedoch mehrere Nietelementaufnahmen 7 vorgesehen. Im Ausführungsbeispiel sind vier Nietelementaufnahmen 7 gezeigt.

Die Nietelementaufnahme 7 weist bzw. die Nietelementaufnahmen 7 weisen hier und vorzugsweise einen, insbesondere jeweils einen, Zwischenspeicher 7a zum Zwischenspeichern 7a von Nietelementen 3 auf. Sind mehrere Zwischenspeicher 7a vorgesehen, bilden diese vorzugsweise eine Zwischenspeicheranordnung 7b. Auch im Zwischenspeicher 7a werden die Nietelemente 3 hier und vorzugsweise ausgerichtet, insbesondere lagegesichert, gespeichert.

Vorzugsweise weist der Zwischenspeicher 7a mindestens einen oder mindestens zwei Schieber 7c, 7d zum Blockieren oder Freigeben von Nietelementen 3 zur Förderung zur Nietmaschine 3, insbesondere zum Nietwerkzeug 2c, auf. Zwei Schieber 7c, 7d ermöglichen ein ganz einfaches Freigeben genau eines Nietelements 3 zur Zeit zur Förderung zur Nietmaschine 2.

Ferner kann der Zwischenspeicher 7a Füllstandssensoren 7e, 7f aufweisen. Hier und vorzugsweise ist ein Füllstandssensor 7e vorgesehen, welcher das Erreichen eines vorbestimmten Füllstands erfasst, und/oder es ist ein Füllstandssensor 7f vorgesehen, welcher das Unterschreiten eines vorbestimmten Füllstands des Zwischenspeichers 7a erfasst. Die Steuerung 11 steuert vorzugsweise die Nietelementbereitstellungseinheit 5, zumindest auch basierend auf dem Füllstand des Zwischenspeichers 7a. Im Ausführungsbeispiel sind die Füllstandssensoren 7e, 7f verschieblich am Zwischenspeicher 7a angeordnet, so dass das zu erfassende Füllstandsnievau verstellt werden kann.

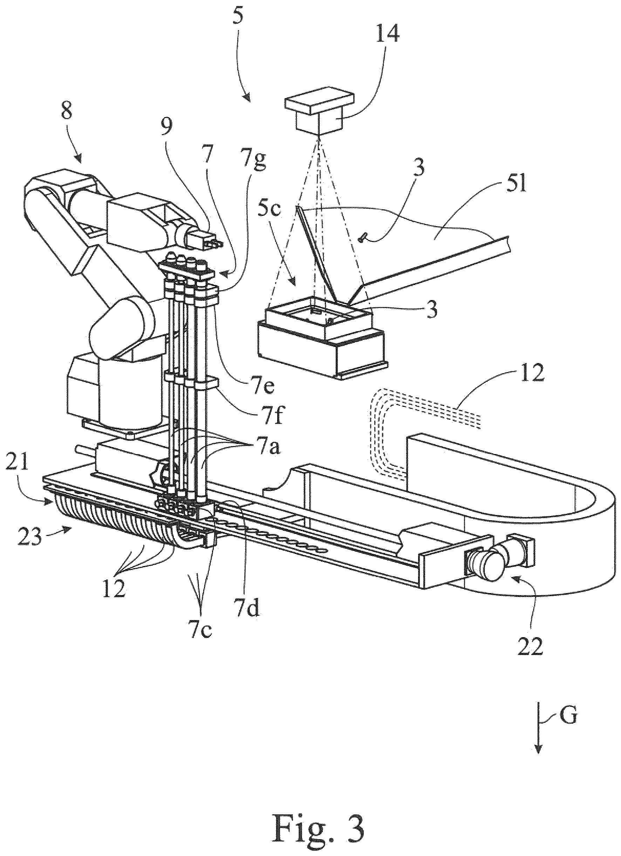

Im Ausführungsbeispiel der Fig. 2 und 3 und vorzugsweise ist der Zwischenspeicher 7a schlauchartig und/oder rohrartig ausgebildet. Dies ist in der Fig. 3 gezeigt, wo die Zwischenspeicher 7a durch Schläuche gebildet werden. Die Füllstandssensoren sind hier als induktive Ringsensoren ausgebildet. In diesem Ausführungsbeispiel werden die Nietelemente 3 von der bzw. den Nietelementaufnahmen 7 aufgenommen und anschließend dem Zwischenspeicher 7a zugeführt.

Auch im Ausführungsbeispiel der Fig. 5 ist ein Zwischenspeicher 7a vorgesehen. Hier wird ein Nietelement 3 entweder direkt vom Abgreifbereich 5c der Nietelementaufhahme 7 zugeführt oder das jeweilige Nietelement 3 wird zunächst dem Zwischenspeicher 7a zugeführt. Nachdem es dem Zwischenspeicher 7a zugeführt wurde, kann es zu einem späteren Zeitpunkt, insbesondere wenn es gebraucht wird, dem Zwischenspeicher 7a entnommen und der Nietelementaufnahme 7 zugeführt werden.

Der Zwischenspeicher 7a weist Nietelementspeicherplätze 7h für einzelne Nietelemente 3 auf, insbesondere zum einzelnen lagegesicherten Speichern der Nietelemente 3. Hier kann der Roboter 8 die Nietelementspeicherplätze 7h einzeln befüllen und/oder von den Nietelementspeicherplätzen 7h Nietelemente 3 einer Nietelementaufnahme 7 zuführen, insbesondere zum Weitertransport zum Endeffektor 2b. Der Zwischenspeicher 7a ist hier flach ausgebildet.

Vorzugsweise wird in einem Speicher der Steuerung 11 abgespeichert, welches Nietelement 3 auf welchem Nietelementspeicherplatz 7h abgelegt wurde. Hierdurch kann auf einfache Art und Weise bei Bedarf das Nietelement 3 von dem Roboter 8 entnommen und der Nietelementaufnahme 7 zum Weitertransport zum Endeffektor 2b zugeführt werden.

Im Ausführungsbeispiel der Fig. 5 sind verschiedene Nietelementspeicherplätze 7h jeweils in einem Nietelementaufnahmemodul 7i zusammengefasst. Hier sind insbesondere mehrere Nietelementaufhahmemodule 7i vorgesehen. Hier und vorzugsweise sind die Nietelementaufnahmemodule 7i boxartig, vorzugsweise nach oben offen, und/oder austauschbar ausgebildet. Die dort abgelegten Nietelemente 3 können dann durch den Austausch des Nietelementaufnahmemoduls 7i einfach ausgetauscht und/oder entfernt werden. Der Boden des jeweiligen Nietelementaufhahmemoduls 7i weist vorzugsweise ein im Querschnitt wellenartiges Profil auf. Im Ausführungsbeispiel ist es im Querschnitt nach Art einer Dreieckwelle ausgebildet.

Die Sensoranordnung 13 kann ferner zum Erkennen von Lage und Ausrichtung der Nietelemente 3 im Zwischenspeicher 7a einen, insbesondere optischen, Sensor 7j aufweisen. Dieser erfasst vorzugsweise mehrere Nietelementaufnahmemodule 7i.

Ferner kann ein Übergabesensor 7g vorgesehen sein, welcher das Übergeben eines Nietelements 3 an die Nietelementaufnahme 7 erfasst. Hierbei handelt es sich vorzugsweise um einen induktiven Ringsensor. Dieser erfasst hier und vorzugsweise das Einfallen eines Nietelements 3 in den Zwischenspeicher 7a.

Die Nietelemente 3 werden von der Nietelementaufnahmeanordnung 6 bzw. den Nietelementaufnahmen 7 zum Endeffektor 2b auf einer Transportstrecke transportiert. Diese Transportstrecke ist hier und vorzugsweise zumindest zum Teil schlauchgebunden. Hier erfolgt der Transport der Nietelemente 3 also in einem Schlauch 12. Insbesondere ist die Transportstrecke zumindest in dem Abschnitt von der Nietelementaufhahmeanordnung 6 zur Verstelleinheit 2a schlauchgebunden. In dieser werden die Nietelemente 3 hier und vorzugsweise mittels eines Unterdrucks und/oder eines Überdrucks transportiert. Vorzugsweise verläuft von jeder der Nietelementaufnahmen 7 ein Schlauch 12 zur Verstelleinheit 2a, vorzugsweise zum Endeffektor 2b.

Zum lagegesicherten Transport unterschiedlicher Nietelemente 3 weisen die Zwischenspeicher 7a und/oder Schläuche 12 hier und vorzugsweise zumindest zum Teil unterschiedlich große Innendurchmesser auf.

Auf der Transportstrecke von der Nietelementaufnahme 7 bzw. dem Zwischenspeicher 7a kann ferner eine Nietweiche 21 vorgesehen sein, diese ermöglicht es, einer Nietelementaufnahme 7 verschiedene Schläuche 12 zum Transport von Nietelementen 3 zur Nietmaschine 2 zuzuordnen. Hierzu weist die Nietweiche 21 hier und vorzugsweise einen Linearantrieb 22 zum Verfahren eines Weichenschlittens 23 auf. Hier ist der Linearantrieb 22 als Elektromotor 24 mit einem Spindel-Spindelmutter-Getriebe 25 ausgebildet.

Mit diesem kann der Weichenschlitten 23 relativ zu den Nietelementaufnahmen 7 verfahren werden, um einen Schlauch 12 einer jeweiligen Nietelementaufnahme 7 zuzuordnen.

Die Fertigungsvorrichtung 1 kann ferner eine Sensoranordnung 13 aufweisen, mittels der die Steuerung 11 die Nietelemente 3 erfasst. Hier und vorzugsweise weist die Sensoranordnung 13 einen optischen Sensor 14 auf, mittels dem die Steuerung 11 die Nietelemente 3 erfasst. Zusätzlich oder alternativ kann die Sensoranordnung 13 auch eine oder mehrere Prüfeinheiten 15, 16 aufweisen, welche weiter unten näher beschrieben werden. Vorzugsweise wird auch die Sensoranordnung 13 und damit ggf. der optische Sensor 14 bzw. die Prüfeinheit 15, 16 hier von der Steuerung 11 gesteuert.

Der optische Sensor 14 ist vorzugsweise über der Nietelementbereitstellungseinheit 5, insbesondere dem Abgreifbereich 5c, angeordnet, wie dies im Ausführungsbeispiel der Fig. 1 der Fall ist. Im Ausführungsbeispiel der Fig. 2 ist der optische Sensor 14 über dem dortigen Abgreifbereich 5c angeordnet. Hier ist er an der Nietelementbereitstellungseinheit 4 angeordnet.

Der Erfassungsbereich des optischen Sensors 14 ist vorzugsweise auf den Abgreifbereich 5c gerichtet. Dabei kann der optische Sensor 14 vorzugsweise ortsfest über der Nietelementbereitstellungseinheit 5, insbesondere dem Abgreifbereich 5c, angeordnet sein, er kann jedoch auch am Roboter 8 befestigt sein. Weist die Nietelementbereitstellungsanordnung 4 mehrere Nietelementbereitstellungseinheiten 5 auf, so können über diesen im Wesentlichen ebenfalls optische Sensoren 14 in der zuvor beschriebenen Weise angeordnet sein.

Bevorzugt ist eine von Roboterbewegungen unabhängige Befestigung des bzw. der optischen Sensoren 14 oberhalb der Nietelementbereitstellungsanordnung 4. Dies ist im Ausführungsbeispiel gezeigt. Dann können parallel zur Arbeitsbewegung des Roboters 8 die Nietelemente 3 erfasst werden und ihre Position und/oder Ausrichtung bestimmt werden. Dies gilt insbesondere auch dann, wenn der Roboter 8 aus dem Erfassungsbereich des optischen Sensors 14 heraus bewegt ist.

Um die Erfassung der Nietelemente 3 im Abgreifbereich 5c zu verbessern, ist zumindest der Abgreifbereich 5c hier und vorzugsweise von unten beleuchtet. Insbesondere kann der Abgreifbereich 5c hierzu einen lichtdurchlässigen Boden aufweisen.

Mittels des optischen Sensors 14 erfasst die Steuerung 11 im Ausführungsbeispiel die Position und/oder Ausrichtung der Nietelemente 3 in der Nietelementbereitstellungseinheit 5, insbesondere im Abgreifbereich 5c.

Zum Abgreifen der Nietelemente 3 steuert die Steuerung 11 basierend auf der Position und/oder der Ausrichtung der Nietelemente 3 den Roboter 8 zur Aufnahme, insbesondere zum Greifen, eines Nietelements 3 an. Unter Ausrichtung ist hier und vorzugsweise die Orientierung der Längsachse des Nietelements 3 insbesondere einschließlich der Orientierung seines Kopfes zu verstehen. Der Roboter 8 kann dann korrespondierend zur Position und Ausrichtung des Nietelements so verstellt werden, dass sein Greifer 9 das Nietelement 3 aufnehmen kann.

Die Steuerung 11 kann mittels der Sensoranordnung 13, insbesondere des optischen Sensors 14, die Gattung, vorzugsweise den Typ, eines von der Nietelementbereitstellungseinheit 5 bereitgestellten, insbesondere im Abgreifbereich 5c liegenden, Nietelements 3 erfassen. Vorzugsweise kontrolliert die Steuerung 11, ob es sich bei dem Typ um einen in eine der Nietelementaufnahmen 7 zu füllenden Solltyp handelt. Auf diese Weise können einer Nietelementaufnahme 7 bzw. den Nietelementaufnahmen 7 nur solche Nietelemente 3 zugeführt werden, welche dem Solltyp entsprechen.

Vorzugsweise werden vorbestimmte, für den Bohrprozess und/oder Nietprozess relevante Eigenschaften der Nietelemente 3, insbesondere der Nietelemente 3 als solcher, vor der Zuführung zum Endeffektor 2b, insbesondere vor der Zuführung zur Nietelementaufnahmeanordnung 6, erfasst. Vorzugsweise sind die vorbestimmten, für den Bohrprozess und/oder den Nietprozess relevanten Eigenschaften geometrische Eigenschaften der Nietelemente 3 und die Steuerung 11 misst mittels einer Sensoranordnung 13, insbesondere mittels eines der Sensoranordnung 13 zugeordneten optischen Sensors 14 und/oder einer der Sensoranordnung 13 zugeordneten Prüfeinheit 15, 16, diese Eigenschaften. Dies ermöglicht beim späteren Herstellen der Nietverbindung ein abgestimmtes Bohren und/oder Nieten entsprechend der erfassten Eigenschaften des Nietelements 3 und/oder die Auswahl eines Nietelements 3 passend zu einer vorgenommenen Bohrung. Insbesondere Kopfüberstände eines Nietelements 3 über einen vordefinierten Toleranzbereich hinaus können auf diese Weise bei der Fertigung mittels der Fertigungsvorrichtung 1 wirksam vermieden werden.

Die für den Bohrprozess und/oder Nietprozess relevanten Eigenschaften der Nietelemente 3 sind vorzugsweise diejenigen Eigenschaften, aufgrund denen der Bohrprozess und/oder Nietprozess nietelementspezifisch, insbesondere für Nietelemente 3 gleichen Typs, angepasst wird bzw. diejenigen Eigenschaften, aufgrund denen das Nietelement 3 gegenüber einem Nietelement 3 gleichen Typs für eine durchgeführte Bohrung für diese ausgewählt wird.

Hier und vorzugsweise können die für den Bohrprozess und/oder den Nietprozess relevanten Eigenschaften die Nietlänge und/oder der Schaftdurchmesser und/oder die Schaftlänge sein. Diese Größen werden hier und vorzugsweise durch die Sensoranordnung, insbesondere den auf den Abgreifbereich gerichteten Sensor 10, erfasst. Zur Erfassung von mittels des optischen Sensors 10 zu erfassenden Eigenschaften der Nietelemente 3, insbesondere der Eigenschaften Nietlänge und/oder Schaftdurchmesser und/oder Schaftlänge, führt die Steuerung eine Transformation der optischen Aufnahme durch. Dies ist notwendig, da beispielsweise die Nietköpfe der Nietelemente 3 hier und vorzugsweise eine leichte Schräglage im Abgreifbereich bewirken. Die Messtoleranz dieser Messung liegt vorzugsweise im Bereich von mindestens 500 µ, weiter vorzugsweise von mindestens 200 µ, weiter vorzugsweise von mindestens 100 µ.

Vorzugsweise prüft die Steuerung 11 mittels der Sensoranordnung 13, insbesondere des optischen Sensors 14, die Nietelemente 3 auf eine Beschädigung. Hier kann beispielsweise erkannt werden, ob der Kopf eines Nietelements 3 fehlt. Die Erfassung bzw. Prüfung der Nietelemente 3 mittels des auf den Abgreifbereich 5c gerichteten optischen Sensors 14 erfolgt vorzugsweise vor dem Abgreifen des Nietelements 3 durch den Roboter 8.

Ferner kann die Fertigungsvorrichtung 1 eine Prüfeinheit 15 zur Erfassung von vorbestimmten, für den Bohrprozess und/oder den Nietprozess relevanten Eigenschaften der Nietelemente 3 aufweisen. Die Prüfeinheit 15 wird hier und vorzugsweise ebenfalls von der Steuerung 11 gesteuert.

Ferner können mit der Prüfeinheit 15 als vorbestimmte, für den Bohrprozess und/oder den Nietprozess relevante Eigenschaften ein Nietkopfdurchmesser und/oder eine Nietkopflänge und/oder ein Winkel eines Nietsenkkopfes und/oder ein Übergangsradius gemessen und erfasst werden. Bei einem Übergangsradius handelt es sich hier und vorzugsweise um einen Radius zwischen zwei Abschnitten eines Nietelements, insbesondere zwischen Kopf 3c und Schaft 3d eines Niets 3a. Zusätzlich kann ggf. auch der Schaftdurchmesser ermittelt werden. Die Messtoleranz der Messung mit der Prüfeinheit 15 ist vorzugsweise geringer, insbesondere mindestens um den Faktor 10 geringer, als die Messtoleranz bei der Messung mit dem auf die Nietelementbereitstellungseinheit 5 gerichteten optischen Sensor 14.

Zudem unterscheiden sich die Messungen mit dem auf die Nietelementbereitstellungseinheit 5 gerichteten optischen Sensor 14 mit der Prüfeinheit 15 vorzugsweise dadurch, dass mit dem auf die Nietelementbereitstellungseinheit 5 gerichteten optischen Sensor 14 mehrere Nietelemente 3 gleichzeitig, und insbesondere vollständig, erfasst werden, während mit der Prüfeinheit 15 vorzugsweise nur ein Ausschnitt eines Nietelements 3 erfasst wird.

Die Prüfeinheit 15 weist einen optischen Sensor 17 auf. Mit dem optischen Sensor 17 werden vorbestimmte für den Bohrprozess oder den Nietprozess relevante Eigenschaften erfasst.

Im Ausführungsbeispiel verlaufen hier und vorzugsweise die Blickachse A des auf die Nietelementbereitstellungseinheit 5 gerichteten optischen Sensors 14 und die Blickachse B des optischen Sensors 17 der Prüfeinheit 15 nicht parallel zueinander. Vorzugsweise sind sie orthogonal zueinander gerichtet. Auf diese Weise kann eine Prüfung des Nietelements 3 von zwei verschiedenen Seiten erfolgen. Dann können nur einseitig ausgeprägte Fehler eines Nietelements 3 besser erkannt werden. Zudem wird hierdurch das Handling durch den Roboter 8 vereinfacht, da dieser die Orientierung des Nietelements 3 nicht ändern muss.

Insbesondere kann die Prüfeinheit 15 eine Beleuchtung 18 zur Messung der vorbestimmten, für den Bohrprozess und/oder den Nietprozess relevanten Eigenschaften aufweisen, welche während der Erfassung das Nietelement 3 beleuchtet. Die Beleuchtung 18 ist hier und vorzugsweise dem Sensor 17 der Prüfeinheit 15 gegenüber angeordnet. Die Beleuchtungsachse und die Blickachse des optischen Sensors 17 sind aber vorzugsweise koaxial angeordnet. Die Blickrichtung des Sensors 17 und der Beleuchtung 18 sind hier aufeinander ausgerichtet.

Im Ausführungsbeispiel ist die Prüfeinheit 15 als beidseitig telezentrisches System ausgebildet. Dies ermöglicht eine genaue Messung ohne eine genaue Positionierung des Nietelements 3 zwischen der Beleuchtung 18 und dem optischen Sensor 17. Die Messtoleranz der Prüfeinheit liegt vorzugsweise unter +- 5 µ, vorzugsweise unter +- 3 µ, weiter vorzugsweise im Wesentlichen bei +- 2 µ.

Ferner kann eine weitere Prüfung der Nietelemente 3 vorgesehen sein. Diese wird hier und vorzugsweise durch eine weitere Prüfeinheit 16 ausgeführt. Die weitere Prüfeinheit 16 weist vorzugsweise einen optischen und/oder mechanischen Sensor 19 auf. Je nach zu erfassenden Eigenschaften der Nietelemente 3 kann die weitere Prüfeinheit 16 wie die Prüfeinheit 15 ausgebildet sein. Sie kann jedoch auch einen anderen Aufbau aufweisen.

Beispielsweise kann die weitere Prüfeinheit 16 zur Prüfung von Nietelementen 3, insbesondere Nietcollaren 3b und/oder Spacern 3c, vorgesehen sein. Auf diese können die Nietelemente 3 zur Prüfung aufgeschoben und/oder in diese können die Nietelemente 3 eingetaucht werden. Eine solche Prüfeinheit 16 hat sich, insbesondere zur Prüfung von Schraubcollaren und/oder von Quetschcollaren, bewährt. Mit einer solchen Prüfeinheit 16 können, insbesondere mittels einer Strukturerkennung, Schließrillen und/oder Schließgewinde erfasst und geprüft werden.

Hier transportiert der Roboter 8 die Nietelemente 3, insbesondere einzeln, von der Nietelementbereitstellungseinheit 5 zu einer Prüfeinheit 15, 16 bzw. den Prüfeinheiten 15, 16. Vorzugsweise hält der Roboter 8 das Nietelement 3 während der Prüfung bzw. der Prüfung mit der Prüfeinheit 15, 16 bzw. den Prüfeinheiten 15, 16 gegriffen. Die Überprüfungen werden hier und vorzugsweise sequentiell durchgeführt. Auch zwischen den Prüfeinheiten 15, 16 wird das Nietelement 3 hier und vorzugsweise vom Roboter 8 transportiert. Ggf. kann es erforderlich sein, dass der Roboter 8 zwischen zwei Prüfeinheiten 15, 16 das Nietelement 3 absetzt und umgreift (d. h. neu greift). Dies ist insbesondere dann sinnvoll, wenn der Greifer 9 des Roboters 8 aufgrund der Größe des Nietelements 3 dieses nur so greifen kann, dass beim Greifen zu messende Größen verdeckt sind. Nach dem Prüfen in der Prüfeinheit 15, 16 bzw. den Prüfeinheiten 15, 16 wird das Nietelement 3 hier und vorzugsweise der Nietelementaufnahmeanordnung 6, insbesondere einer Nietelementaufnahme 7 der Nietelementaufnahmeanordnung 6, zugeführt.

Besonders bevorzugt ist das Verfahren in der Art ausgebildet, dass alle der Nietelementaufhahmeanordnung 6 zugeführten Nietelemente 3 auf die vorbestimmten, für den Bohrprozess und/oder den Nietprozess relevanten Eigenschaften geprüft werden. Vorzugsweise werden jedoch zumindest 50 %, weiter vorzugsweise zumindest 80 %, weiter vorzugsweise mindestens 95 %, aller einer Nietelementaufnahme 7 zugeführten Nietelemente 3 geprüft. Insofern unterscheidet sich hier und vorzugsweise das Verfahren von einer chargenweisen stichprobenartigen Prüfung von Nietelementen 3 bei einem Niethersteller dadurch, dass eine signifikante Anzahl von Nietelementen 3 von der Fertigungsvorrichtung 1 vor der Zuführung zur Nietelementaufnahme 7 auf vorbestimmte, für den Bohr- und/oder Nietprozess relevante Eigenschaften geprüft werden. Vorzugsweise werden von der Steuerung fehlerhafte Nietelemente 3 erfasst und deren Fehler protokolliert. Die fehlerhaften Nietelemente 3 können vorzugsweise der Umverpackung zugeordnet werden, welcher sie entnommen wurden. Dies ermöglicht ein umfassendes Reklamationsmanagement von Nietelementen 3 gegenüber dem Hersteller der Nietelemente 3.

Ferner kann vorgesehen sein, dass die erfassten bzw. geprüften Nietelemente 3 in Abhängigkeit von den erfassten Eigenschaften eines Nietelements 3 einer der Nietelementaufnahmen 7 zugeführt werden. Vorzugsweise werden mindestens zwei der Nietelementaufnahmen 7 Nietelemente 3 des gleichen Typs zugeführt. Dies ist insbesondere zum Sortieren der Nietelemente 3 wie nachfolgend beschrieben vorteilhaft.

Vorzugsweise werden zum Sortieren der Nietelemente 3 eines Typs Subkategorien gebildet und diesen Subkategorien, insbesondere jeweils, einer Nietelementaufnahme 7 zugeordnet. Zusätzlich oder alternativ können auf der Grundlage der Informationen über die Nietelemente 3, insbesondere der Spezifikation der Nietelemente 3, Subkategorien gebildet und diesen Subkategorien, insbesondere jeweils, eine Nietelementaufhahme 7 zugeordnet werden. Die Nietelemente 3 können dann in Abhängigkeit von ihrer Prüfung in der Prüfeinheit 15, 16 entsprechend ihrer Einordnung in eine Subkategorie der dieser Subkategorie zugeordneten Nietelementaufhahme 7 zugeführt werden.

Vorzugsweise werden die Subkategorien durch Toleranzbereiche gebildet. Auf diese Weise ist eine Chargenunterverteilung von Nietelementen 3 in die Nietelementaufhahmen 7 möglich. Die Nietelemente 3 können also in der Weise von der Fertigungsvorrichtung 1 sortiert werden, dass die, insbesondere aus einer Umverpackung stammenden, Nietelemente 3 in verschiedene kleinere Toleranzbereiche sortiert werden. Hierdurch werden den einzelnen Nietelementaufnahmen 7 durch das Sortieren nur Nietelemente 3 mit einer in der Gesamtheit geringeren Toleranzbereichsbreite als die der Nietelementbereitstellungseinheit 5 ursprünglich aus einer Umverpackung zugeführten Nietelementen 3 zugeführt.

In diesem Zusammenhang hat es sich besonders bewährt, wenn Informationen über die einer Nietelementaufnahme 7 zugeführten Nietelemente 3 oder einer Nietelementaufnahme 7 zuzuführenden Nietelemente 3 verknüpft werden. Vorzugsweise werden die Informationen, insbesondere die Spezifikation und/oder die Subkategorie, mit der Nietelementaufhahme 7 verknüpft. Dabei kann es sich insbesondere um einen Toleranzbereich handeln. Zusätzlich oder alternativ können jedoch auch Eigenschaften, insbesondere Abmessungen, jedes einzelnen zugeführten Nietelements 3 und ggf. die Reihenfolge der Zuführung mit der Nietelementaufnahme 7 verknüpft werden. Dies erfolgt vorzugsweise in einem Speicher 11a der Steuerung 11.

Auf Basis dieser Informationen kann später unter verschiedenen Nietelementen 3 eines Typs nach dem Vermessen einer Bohrung ein Nietelement 3 zum Setzen in die Bohrung ausgewählt werden, indem eine Fertigungsvorrichtung 1 ein entsprechendes Nietelement 3 anfordert. Zusätzlich oder alternativ kann die mit der Fertigungsvorrichtung 1 zu erstellende Bohrung auf der Basis eines zu setzenden Nietelements 3 - insbesondere aufgrund seiner Einordnung in eine Subkategorie - bestimmt oder angepasst werden, beispielsweise die zu bohrende Senktiefe in Abhängigkeit von den Abmessungen des Nietkopfes bestimmt oder angepasst werden. Hierfür werden vorzugsweise die verknüpften Informationen von der Fertigungsvorrichtung 1 abgefragt.

Hier und vorzugsweise werden die Nietelemente 3 ausgerichtet, insbesondere lagedefiniert, von der bzw. den Nietelementaufnahmen 7 aufgenommen, beispielsweise in einem Schlauch 12. Besonders bewährt hat es sich, wenn die Zufuhr der Nietelemente 3 zu der Nietmaschine von einer Nietelementaufnahme 7 in der Reihenfolge aus dieser Nietelementaufnahme 7 erfolgt, wie die Nietelemente 3 der Nietelementaufnahme 7 zugeführt wurden.

Wie aus der vorstehenden Beschreibung und der Fig. 1 hervorgeht, sind die Nietelementbereitstellungsanordnung 4, ggf. die Prüfeinheiten 15, 16, und die Nietelementaufnahmeanordnung 6 miteinander verkettet, also insbesondere räumlich beieinander angeordnet.

Die Nietelemente 3 werden vorzugsweise durch einen, insbesondere feststehend montierten, Roboter 8 von der Nietelementbereitstellungseinheit 5 ggf. über die Prüfeinheiten 15, 16 der Nietelementaufnahmeanordnung 6 zugeführt. Für den Transport können jedoch ggf. auch mehrere Roboter 8 vorgesehen sein.

Fehlerhafte Nietelemente 3 werden vorzugsweise einem Ausschussbehälter 20a zugeführt. Dies kann beispielsweise roboterbasiert, insbesondere mittels des Roboters 8, erfolgen, oder aber, sollte die Erkennung von fehlerhaften Nietelementen 3 im Abgreifbereich erfolgen, können gute Nietelemente 3 vom Roboter 8 den Nietelementaufnahmen 7 zugeführt werden und, insbesondere wenn nur noch fehlerhafte Nietelemente 3 im Abgreifbereich verblieben sind, die im Abgreifbereich verbliebenen Nietelemente 3 von der Nietelementbereitstellungseinheit 5, beispielsweise mittels Rüttelbewegungen, einem Ausschussbehälter 20b zugeführt werden.

Auf der Basis der mit der Nietelementaufnahme 7 verknüpften Informationen kann die Fertigungsvorrichtung 1 den Bohrprozess und/oder den Nietprozess an das zu setzende Nietelement 3 anpassen. Zusätzlich oder alternativ kann für ein bereits gebohrtes und ggf. vermessenes Loch ein passendes Nietelement 3 von den Nietelementaufnahmen 7 angefordert werden.

Bevorzugt wird somit auf der Basis der vor der Zuführung der Nietelemente 3 zur Nietelementaufhahme 7 erfassten, vorbestimmten, für den Bohrprozess und/oder den Nietprozess relevanten Eigenschaften der Nietelemente 3 die Bohrung und/oder die Nietung vorgenommen, und/oder, es wird auf der Basis der vor der Zuführung der Nietelemente 3 zur Nietelementaufnahme 7 erfassten, vorbestimmten, für den Bohrprozess und/oder den Nietprozess relevanten Eigenschaften der Nietelemente 3 für eine Bohrung ein passendes Nietelement 3 angefordert und eine Nietverbindung hergestellt.

Von besonderer Bedeutung ist dabei insbesondere die Vermessung der Köpfe der Nietelemente 3 und die Anpassung der Bohrung, insbesondere der Senkung an den Kopf des Nietelements 3 bzw. die Auswahl eines Nietelements 3 mit einem passenden Kopf für eine Bohrung, insbesondere die Senkung einer Bohrung. Gemäß einer besonders bevorzugten Ausgestaltung des Verfahrens erfasst die Fertigungsvorrichtung 1 beispielsweise als vorbestimmte, für den Bohrprozess und/oder den Nietprozess relevante Eigenschaften der Nietelemente 3 den Nietkopfdurchmesser und/oder die Nietkopflänge vor der Zuführung zur Nietelementaufnahme. Außerdem ist vorgesehen, dass die Fertigungsvorrichtung 1 auf der Basis des Nietkopfdurchmessers und/oder der Nietkopflänge die Bohrung bestimmt und vornimmt, insbesondere die Senktiefe für die Bohrung bestimmt und vornimmt.

In der Fig. 2 sind schließlich beispielhaft für die Nietelemente 3 in a) ein Vollniet mit Senkkopf und in b) ein Passniet mit Senkkopf und ein zum Passniet korrespondierender Nietcollar 3b gezeigt. Darüber hinaus können auch viele weitere Nietelemente 3 mit der Fertigungsvorrichtung 1 auf dieselbe Art und Weise Nietelementaufnahmen 7 zugeführt werden. Dies können insbesondere auch Schraubnieten und/oder Blindniete sein.

Für die in der Fig. 2 gezeigten Nietelemente 3 sind beispielhaft für den Bohrprozess und/oder den Nietprozess mögliche relevante Eigenschaften gezeigt, wobei eine Auswahl aus diesen jeweils von den Anforderungen an die zu erzeugende Nietverbindung abhängen können. Die relevanten Eigenschaften sind hier und vorzugsweise die Nietlänge L_{N} und/oder die Schaftlänge L_{S} und/oder die Kopflänge L_{K} und/oder der Kopfdurchmesser D_{K} und/oder der Schaftdurchmesser D_{S}. Diese sind in der Fig. 2 bemaßt. Ferner sind der Senkkopfwinkel W sowie der Übergangsradius R als mögliche für den Bohrprozess und/oder den Nietprozess relevante Eigenschaften eingezeichnet. Darüber hinaus ist eine Nietstruktur, nämlich die Schließrillen 3e des Passniets in Fig. 2b), gezeigt.

Für den Nietcollar 3b sind hier als für den Nietprozess relevante Eigenschaften die Nietcollarlänge L_{C} sowie der Nietcollarinnendurchmesser D_{CI} und der Nietcollaraußendurchmesser D_{CA} gezeigt.

## Patentansprüche

1. Verfahren zum Versorgen einer Nietmaschine (2) mit Nietelementen (3), insbesondere während des Betriebs der Nietmaschine (2),
wobei mindestens eine Nietelementbereitstellungsanordnung (4) mit mindestens einer Nietelementbereitstellungseinheit (5) zur Bereitstellung und zur Vereinzelung der Nietelemente (3) vorgesehen ist,
wobei die Nietmaschine (2) eine Nietelementaufnahmeanordnung (4) mit mindestens einer Nietelementaufnahme (7) zur Aufnahme der Nietelemente (3) aufweist,
wobei zumindest ein Teil des Transports von einer der Nietelementbereitstellungseinheiten (5) zu einer der Nietelementaufnahmen (7) roboterbasiert erfolgt.

2. Verfahren nach Anspruch 1, **dadurch gekennzeichnet, dass** die Nietelemente (3) von einem Roboter (8) mit mindestens zwei oder mindestens drei Achsen von einer der Nietelementbereitstellungseinheiten (5) zu einer der Nietelementaufnahmen (7) transportiert werden.

3. Verfahren nach Anspruch 1 oder 2, **dadurch gekennzeichnet, dass** die Nietmaschine (2) eine Verstelleinheit (2a) mit einem Endeffektor (2b) mit einem Nietwerkzeug aufweist und das Nietwerkzeug das Nietelement (3) setzt, vorzugsweise, dass der Endeffektor (2b) ein Bohrwerkzeug und ein Nietwerkzeug aufweist und das Bohrwerkzeug ein Loch in ein Strukturbauteil (10) bohrt und das Nietwerkzeug ein Nietelement (3) in das gebohrte Loch setzt.

4. Verfahren nach einem der vorhergehenden Ansprüche, **dadurch gekennzeichnet, dass** die Nietelementbereitstellungseinheit (5) einen Wendelförderer (5d) aufweist, mittels welchem die Nietelemente (3) einem Abgreifbereich (5c) zugeführt werden, vorzugsweise, dass der Wendelförderer (5d) eine Wendel (5e) und eine Längsachse (L) aufweist, um welche sich die Wendel (5e) erstreckt, weiter vorzugsweise, dass die Längsachse (L) zur Schwerkraftrichtung (G) geneigt ist, weiter vorzugsweise, dass eine Rutsche (51) vorgesehen ist, über welche die Nietelemente (3) zum Abgreifbereich (5c) rutschen, weiter vorzugsweise, dass durch eine Drehung der Wendel (5e) ein Nietelement (3) vom Wendelförderer (5d) durch das Abwerfen desselben und Rutschen über die Rutsche (51) dem Abgreifbereich (5c) zugeführt wird.

5. Verfahren nach einem der vorhergehenden Ansprüche, **dadurch gekennzeichnet, dass** die Nietelemente (3) in der Nietelementbereitstellungseinheit (5) vereinzelt und vorzugsweise einem Abgreifbereich (5c) zugeführt werden, weiter vorzugsweise, dass die Nietelemente (3) im Abgreifbereich (5c) roboterbasiert abgegriffen werden.

6. Verfahren nach einem der vorhergehenden Ansprüche, **dadurch gekennzeichnet, dass** die Nietelemente (3) von der Nietelementaufnahmeanordnung (6) zum Endeffektor (2b) auf einer Transportstrecke transportiert werden,
wobei die Transportstrecke zumindest zum Teil schlauchgebunden ist, vorzugsweise, dass eine Teiltransportstrecke von der Nietelementaufnahmeanordnung (6) zur Verstelleinheit (2a) schlauchgebunden ist,
weiter vorzugsweise, dass zumindest auf dieser Teiltransportstrecke die Nietelemente (3) mittels eines Unterdrucks und/oder Überdrucks transportiert werden.

7. Verfahren nach einem der vorhergehenden Ansprüche, **dadurch gekennzeichnet, dass** das Versorgen einer Nietmaschine (2) mit Nietelementen (3) von einer Steuerung (11) gesteuert wird, vorzugsweise, dass die Steuerung (11) mittels einer Sensoranordnung (13), insbesondere eines optischen Sensors (14), die Nietelemente (3) erfasst, weiter vorzugsweise, dass die Steuerung (11) mittels des optischen Sensors (14) die Position und/oder Ausrichtung der Nietelemente (3) in einer der Nietelementbereitstellungseinheiten (5), insbesondere im Abgreifbereich (5c), erfasst, weiter vorzugsweise, dass die Steuerung (11) basierend auf der Position und/oder Ausrichtung der Nietelemente (3) den Roboter (8) zur Aufnahme eines Nietelements (3) ansteuert.

8. Verfahren nach Anspruch **dadurch gekennzeichnet, dass** die Steuerung (11) mittels der Sensoranordnung, insbesondere mittels des optischen Sensors (14), den Typ eines von der Nietelementbereitstellungseinheit (4) bereitgestellten, insbesondere im Abgreifbereich (5c) liegenden, Nietelements (3) erfasst, vorzugsweise, dass die Steuerung (11) kontrolliert, ob es sich bei dem erfassten Typ um einen einer der Nietelementaufnahmen (7) zuzuführenden Solltyp handelt.

9. Verfahren nach einem der vorhergehenden Ansprüche, **dadurch gekennzeichnet, dass** vorbestimmte, für den Bohrprozess und/oder den Nietprozess relevante Eigenschaften der Nietelemente (3) vor der Zuführung zur Nietelementaufnahmeanordnung (4) erfasst werden.

10. Verfahren nach Anspruch 9, **dadurch gekennzeichnet, dass** eine der für den Bohrprozess und/oder den Nietprozess relevante Eigenschaften die Nietlänge (L_{N}) und/oder der Schaftdurchmesser (D_{S}) und/oder die Schaftlänge (L_{S}) ist.

11. Verfahren nach einem der vorhergehenden Ansprüche, **dadurch gekennzeichnet, dass** die Steuerung (11) mittels der Sensoranordnung (13), insbesondere mittels des optischen Sensors (14), die Nietelemente (3) auf eine Beschädigung prüft.

12. Verfahren zur Herstellung eines Strukturbauteils (10), insbesondere eines Flugzeugstrukturbauteils, wobei eine Nietmaschine (2) durch das Verfahren gemäß einem der Ansprüche 1 bis 11 mit Nietelementen (3) versorgt wird und dass von der Nietelementaufnahmeanordnung (6) die Nietelemente (3) einem Endeffektor (2b) der Nietmaschine (2) zugeführt werden und dass in das Strukturbauteil (10) ein Loch gebohrt und ein dem Endeffektor (2b) zugeführtes Nietelement (3) in das Loch eingesetzt und genietet wird.

13. Fertigungsvorrichtung zur Durchführung eines Verfahrens nach einem der vorhergehenden Ansprüche, wobei die Fertigungsvorrichtung (1) eine Nietmaschine (2) mit einer Nietelementaufnahmeanordnung (6), eine Nietelementbereitstellungsanordnung (4) mit mindestens einer Nietelementbereitstellungseinheit (5) zum Bereitstellen und Vereinzeln von Nietelementen (3) und einen Roboter (8) zum zumindest teilweisen Transport der Nietelemente (3) von einer der Nietelementbereitstellungseinheiten (5) zu einer der Nietelementaufnahmen (7) aufweist.

14. Fertigungsvorrichtung nach Anspruch 13, **dadurch gekennzeichnet, dass** die Nietelementbereitstellungseinheit (5) einen Wendelförderer (5d) aufweist, mittels welchem die Nietelemente (3) einem Abgreifbereich (5c) zugeführt werden, vorzugsweise, dass der Wendelförderer (5d) eine Wendel (5e) und eine Längsachse (L) aufweist, um welche sich die Wendel (5e) erstreckt, weiter vorzugsweise, dass die Längsachse (L) zur Schwerkraftrichtung (G) geneigt ist, weiter vorzugsweise, dass eine Rutsche (51) vorgesehen ist, über welche die Nietelemente (3) zum Abgreifbereich (5e) rutschen, weiter vorzugsweise, dass durch eine Drehung der Wendel (5e) ein Nietelement (3) vom Wendelförderer (5d) durch das Abwerfen desselben und Rutschen über die Rutsche (51) dem Abgreifbereich (5c) zugeführt wird.

15. Fertigungsvorrichtung nach Anspruch 13 oder 14, **dadurch gekennzeichnet, dass** der Roboter (8) mindestens zwei oder mindestens drei Achsen aufweist, vorzugsweise, dass der Roboter (8) die Nietelemente (3) von einer der Nietelementbereitstellungseinheiten (5) zu einer der Nietelementaufnahmen (7) transportiert.

16. Fertigungsvorrichtung nach einem der Ansprüche 13 bis 15, **dadurch gekennzeichnet, dass** der Roboter (8) an der Nietmaschine (2) befestigt ist oder dass der Roboter (8) separat zur Nietmaschine (2) aufgestellt ist.

17. Fertigungsvorrichtung nach einem der Ansprüche 13 bis 16, **dadurch gekennzeichnet, dass** die Nietmaschine (2) einen Verstelleinheit (2a) mit einem Endeffektor (2b) mit einem Nietwerkzeug aufweist, vorzugsweise dass der Endeffektor (2b) ein Bohrwerkzeug und ein Nietwerkzeug aufweist.

18. Fertigungsvorrichtung nach einem der Ansprüche 13 bis 17, **dadurch gekennzeichnet, dass** die Nietelementbereitstellungseinheit (5) an der Nietmaschine (2) befestigt ist oder dass die Nietelementbereitstellungseinheit (5) separat zur Nietmaschine (2) aufgestellt ist.

19. Fertigungsvorrichtung nach einem der Ansprüche 13 bis 18, **dadurch gekennzeichnet, dass** die Nietelementaufnahmeanordnung an der Nietmaschine befestigt ist, vorzugsweise, dass die Nietelementaufnahmeanordnung (6) an einem ortsfesten Teil der Nietmaschine (2) befestigt ist.

## Claims

1. Method for supplying a riveting machine (2) with rivet elements (3), in particular during operation of the riveting machine (2),
wherein at least one rivet element providing arrangement (4) comprising at least one rivet element providing unit (5) for providing and separating the rivet elements (3) is provided,
wherein the riveting machine (2) has a rivet element receiving arrangement (4) comprising at least one rivet element receptacle (7) for receiving the rivet elements (3) ,
wherein at least a part of the transport from one of the rivet element providing units (5) to one of the rivet element receptacles (7) is realized in a robot-based manner.

2. Method according to Claim 1, **characterized in that** the rivet elements (3) are transported from one of the rivet element providing units (5) to one of the rivet element receptacles (7) by a robot (8) having at least two or at least three axes.

3. Method according to Claim 1 or 2, **characterized in that** the riveting machine (2) has an adjusting unit (2a) having an end effector (2b) with a riveting tool, and the riveting tool sets the rivet element (3), preferably **in that** the end effector (2b) has a drilling tool and a riveting tool, and the drilling tool drills a hole into a structural component (10) and the riveting tool sets a rivet element (3) into the drilled hole.

4. Method according to one of the preceding claims, **characterized in that** the rivet element providing unit (5) has a spiral conveyor (5d), by means of which the rivet elements (3) are fed to a pick-off region (5c), preferably **in that** the spiral conveyor (5d) has a spiral (5e) and a longitudinal axis (L), about which the spiral (5e) extends, further preferably **in that** the longitudinal axis (L) is inclined to the direction of gravity (G), further preferably **in that** a chute (51) is provided, over which the rivet elements (3) slide to the pick-off region (5c), further preferably **in that**, by a rotation of the spiral (5e), a rivet element (3) is fed from the spiral conveyor (5d), by discharging of this same and sliding over the chute (51), to the pick-off region (5c).

5. Method according to one of the preceding claims, **characterized in that** the rivet elements (3) in the rivet element providing unit (5) are separated and preferably fed to a pick-off region (5c), further preferably **in that** the rivet elements (3) in the pick-off region (5c) are picked off in a robot-based manner.

6. Method according to one of the preceding claims, **characterized in that** the rivet elements (3) are transported from the rivet element receiving arrangement (6) to the end effector (2b) on a transport path, wherein the transport path is at least partially tube-bound, preferably **in that** a partial transport path from the rivet element receiving arrangement (6) to the adjusting unit (2a) is tube-bound,
further preferably **in that**, at least on this partial transport path, the rivet elements (3) are transported by means of an underpressure and/or overpressure.

7. Method according to one of the preceding claims, **characterized in that** the supplying of a riveting machine (2) with rivet elements (3) is controlled by a control system (11), preferably **in that** the control system (11), by means of a sensor arrangement (13), in particular an optical sensor (14), detects the rivet elements (3), further preferably **in that** the control system (11), by means of the optical sensor (14), detects the position and/or alignment of the rivet elements (3) in one of the rivet element providing units (5), in particular in the pick-off region (5c), further preferably **in that** the control system (11), on the basis of the position and/or alignment of the rivet elements (3), activates the robot (8) to receive a rivet element (3).

8. Method according to Claim 7, **characterized in that** the control system (11), by means of the sensor arrangement, in particular by means of the optical sensor (14), detects the type of a rivet element (3) provided by the rivet element providing unit (4), in particular lying in the pick-off region (5c), preferably **in that** the control system (11) checks whether the detected type is constituted by a desired type to be fed to one of the rivet element receptacles (7).

9. Method according to one of the preceding claims, **characterized in that** predetermined characteristics, relevant to the drilling process and/or the riveting process, of the rivet elements (3) are detected prior to feeding to the rivet element receiving arrangement (4).

10. Method according to Claim 9, **characterized in that** one of the characteristics relevant to the drilling process and/or the riveting process is the rivet length (L_{N}) and/or the shank diameter (D_{S}) and/or the shank length (L_{S}).

11. Method according to one of the preceding claims, **characterized in that** the control system (11), by means of the sensor arrangement (13), in particular by means of the optical sensor (14), checks the rivet elements (3) for damage.

12. Method for producing a structural component (10), in particular an aircraft structural component, wherein a riveting machine (2), by the method according to one of Claims 1 to 11, is supplied with rivet elements (3), and that, from the rivet element receiving arrangement (6), the rivet elements (3) are fed to an end effector (2b) of the riveting machine (2), and that a hole is drilled into the structural component (10), and a rivet element (3) fed to the end effector (2b) is inserted into the hole and riveted.

13. Production apparatus for implementing a method according to one of the preceding claims, wherein the production apparatus (1) has a riveting machine (2) having a rivet element receiving arrangement (6), a rivet element providing arrangement (4) comprising at least one rivet element providing unit (5) for providing and separating rivet elements (3), and a robot (8) for at least partially transporting the rivet elements (3) from one of the rivet element providing units (5) to one of the rivet element receptacles (7).

14. Production apparatus according to Claim 13, **characterized in that** the rivet element providing unit (5) has a spiral conveyor (5d), by means of which the rivet elements (3) are fed to a pick-off region (5c), preferably **in that** the spiral conveyor (5d) has a spiral (5e) and a longitudinal axis (L) about which the spiral (5e) extends, further preferably **in that** the longitudinal axis (L) is inclined to the direction of gravity (G), further preferably **in that** a chute (51) is provided, over which the rivet elements (3) slide to the pick-off region (5e), further preferably **in that**, by a rotation of the spiral (5e), a rivet element (3) is fed from the spiral conveyor (5d), by discharging of this same and sliding over the chute (51), to the pick-off region (5c).

15. Production apparatus according to Claim 13 or 14, **characterized in that** the robot (8) has at least two or at least three axes, preferably **in that** the robot (8) transports the rivet elements (3) from one of the rivet element providing units (5) to one of the rivet element receptacles (7).

16. Production apparatus according to one of Claims 13 to 15, **characterized in that** the robot (8) is fastened to the riveting machine (2), or **in that** the robot (8) is set up separately from the riveting machine (2).

17. Production apparatus according to one of Claims 13 to 16, **characterized in that** the riveting machine (2) has an adjusting unit (2a) having an end effector (2b) with a riveting tool, preferably **in that** the end effector (2b) has a drilling tool and a riveting tool.

18. Production apparatus according to one of Claims 13 to 17, **characterized in that** the rivet element providing unit (5) is fastened to the riveting machine (2), or **in that** the rivet element providing unit (5) is set up separately from the riveting machine (2).

19. Production apparatus according to one of Claims 13 to 18, **characterized in that** the rivet element receiving arrangement is fastened to the riveting machine, preferably **in that** the rivet element receiving arrangement (6) is fastened to a stationary part of the riveting machine (2).

## Revendications

1. Procédé d'alimentation d'une riveteuse (2) avec des éléments de rivetage (3), notamment pendant le fonctionnement de la riveteuse (2),
au moins un arrangement de mise à disposition d'éléments de rivetage (4) comprenant au moins une unité de mise à disposition d'éléments de rivetage (5) destinée à mettre à disposition et à déparier les éléments de rivetage (3) étant présent,
la riveteuse (2) possédant un arrangement d'accueil d'éléments de rivetage (4) comprenant au moins un logement d'éléments de rivetage (7) destiné à accueillir les éléments de rivetage (3),
au moins une partie du transport de l'une des unités de mise à disposition d'éléments de rivetage (5) vers l'un des logements d'éléments de rivetage (7) s'effectuant en s'appuyant sur un robot.

2. Procédé selon la revendication 1, **caractérisé en ce que** les éléments de rivetage (3) sont transportés par un robot (8) pourvu d'au moins deux ou d'au moins trois axes de l'une des unités de mise à disposition d'éléments de rivetage (5) vers l'un des logements d'éléments de rivetage (7).

3. Procédé selon la revendication 1 ou 2, **caractérisé en ce que** la riveteuse (2) possède une unité de positionnement (2a) pourvue d'un effecteur terminal (2b) muni d'un outil de rivetage et l'outil de rivetage pose l'élément de rivetage (3), de préférence **en ce que** l'effecteur terminal (2b) possède un outil de perçage et un outil de rivetage et l'outil de perçage perce un trou dans un composant structural (10) et l'outil de rivetage pose un élément de rivetage (3) dans le trou percé.

4. Procédé selon l'une des revendications précédentes, **caractérisé en ce que** l'unité de mise à disposition d'éléments de rivetage (5) possède un convoyeur à spirale (5d) au moyen duquel les éléments de rivetage (3) sont acheminés à une zone de prélèvement (5c), de préférence **en ce que** le convoyeur à spirale (5d) possède une spirale (5e) et un axe longitudinal (L) autour duquel s'étend la spirale (5e), encore de préférence **en ce que** l'axe longitudinal (L) est incliné dans la direction de la force de la gravité (G), encore de préférence **en ce qu'**une glissière (51) est présente, par le biais de laquelle les éléments de rivetage (3) glissent vers la zone de prélèvement (5c), encore de préférence **en ce que** par une rotation de la spirale (5e), un élément de rivetage (3) est acheminé du convoyeur à spirale (5d) à la zone de prélèvement (5c) par l'éjection de celui-ci et son glissement sur la glissière (51).

5. Procédé selon l'une des revendications précédentes, **caractérisé en ce que** les éléments de rivetage (3) sont dépariés dans l'unité de mise à disposition d'éléments de rivetage (5) et de préférence acheminés à une zone de prélèvement (5c), encore de préférence **en ce que** les éléments de rivetage (3) sont prélevés dans la zone de prélèvement (5c) en s'appuyant sur un robot.

6. Procédé selon l'une des revendications précédentes, **caractérisé en ce que** les éléments de rivetage (3) sont transportés de l'arrangement d'accueil d'éléments de rivetage (6) vers l'effecteur terminal (2b) sur un segment de transport,
le segment de transport étant au moins partiellement relié par un tuyau, de préférence **en ce qu'**un segment de transport de l'arrangement d'accueil d'éléments de rivetage (6) à l'unité de positionnement (2a) est relié par un tuyau,
encore de préférence **en ce que** les éléments de rivetage (3) sont transportés au moyen d'une dépression et/ou d'une surpression au moins sur ce segment de transport.

7. Procédé selon l'une des revendications précédentes, **caractérisé en ce que** l'approvisionnement d'une riveteuse (2) avec des éléments de rivetage (3) est commandé par une commande (11), de préférence **en ce que** la commande (11) détecte les éléments de rivetage (3) au moyen d'un arrangement de capteur (13), notamment d'un capteur optique (14), encore de préférence **en ce que** la commande (11) détecte, au moyen du capteur optique (14), la position et/ou l'orientation des éléments de rivetage (3) dans l'une des unités de mise à disposition d'éléments de rivetage (5), notamment dans la zone de prélèvement (5c), encore de préférence **en ce que** la commande (11) commande le robot (8) en vue d'accueillir un élément de rivetage (3) en se basant sur la position et/ou l'orientation des éléments de rivetage (3).

8. Procédé selon la revendication 7, **caractérisé en ce que** la commande (11) détecte le type d'un élément de rivetage (3) mis à disposition par l'unité de mise à disposition d'éléments de rivetage (4), notamment qui se trouve dans la zone de prélèvement (5c), au moyen de l'arrangement de capteur, notamment au moyen du capteur optique (14), de préférence **en ce que** la commande (11) contrôle si le type détecté est un type voulu à acheminer à l'un des logements d'éléments de rivetage (7) .

9. Procédé selon l'une des revendications précédentes, **caractérisé en ce que** des propriétés prédéterminées des éléments de rivetage (3), pertinentes pour le processus de perçage et/ou le processus de rivetage, sont détectées avant l'acheminement à l'arrangement d'accueil d'éléments de rivetage (4).

10. Procédé selon la revendication 9, **caractérisé en ce que** l'une des propriétés pertinentes pour le processus de perçage et/ou le processus de rivetage est la longueur du rivet (L_{N}) et/ou le diamètre de la queue (D_{S}) et/ou la longueur de la queue (L_{S}).

11. Procédé selon l'une des revendications précédentes, **caractérisé en ce que** la commande (11) vérifie l'absence de dommages sur les éléments de rivetage (3) au moyen de l'arrangement de capteur (13), notamment au moyen du capteur optique (14).

12. Procédé de fabrication d'un composant structural (10), notamment d'un composant structural d'aéronef, une riveteuse (2) étant approvisionnée en éléments de rivetage (3) par le procédé selon l'une des revendications 1 à 11 et que les éléments de rivetage (3) sont acheminés de l'arrangement d'accueil d'éléments de rivetage (6) à un effecteur terminal (2b) de la riveteuse (2) et qu'un trou est percé dans le composant structural (10) puis un élément de rivetage (3) acheminé à l'effecteur terminal (2b) est introduit dans le trou et riveté.

13. Dispositif de fabrication destiné à mettre en œuvre un procédé selon l'une des revendications précédentes, le dispositif de fabrication (1) possédant une riveteuse (2) comprenant un arrangement d'accueil d'éléments de rivetage (6), un arrangement de mise à disposition d'éléments de rivetage (4) comprenant au moins une unité de mise à disposition d'éléments de rivetage (5) destinée à mettre à disposition et à déparier les éléments de rivetage (3) et un robot (8) destiné au transport au moins partiel des éléments de rivetage (3) de l'une des unités de mise à disposition d'éléments de rivetage (5) vers l'un des logements d'éléments de rivetage (7).

14. Dispositif de fabrication selon la revendication 13, **caractérisé en ce que** l'unité de mise à disposition d'éléments de rivetage (5) possède un convoyeur à spirale (5d) au moyen duquel les éléments de rivetage (3) sont acheminés à une zone de prélèvement (5c), de préférence **en ce que** le convoyeur à spirale (5d) possède une spirale (5e) et un axe longitudinal (L) autour duquel s'étend la spirale (5e), encore de préférence **en ce que** l'axe longitudinal (L) est incliné dans la direction de la force de la gravité (G), encore de préférence **en ce qu'**une glissière (51) est présente, par le biais de laquelle les éléments de rivetage (3) glissent vers la zone de prélèvement (5e), encore de préférence **en ce que** par une rotation de la spirale (5e), un élément de rivetage (3) est acheminé du convoyeur à spirale (5d) à la zone de prélèvement (5c) par l'éjection de celui-ci et son glissement sur la glissière (51).

15. Dispositif de fabrication selon la revendication 13 ou 14, **caractérisé en ce que** le robot (8) possède au moins deux ou au moins trois axes, de préférence **en ce que** le robot (8) transporte les éléments de rivetage (3) de l'une des unités de mise à disposition d'éléments de rivetage (5) vers l'un des logements d'éléments de rivetage (7).

16. Dispositif de fabrication selon l'une des revendications 13 à 15, **caractérisé en ce que** le robot (8) est fixé à la riveteuse (2) ou **en ce que** le robot (8) est installé séparément de la riveteuse (2).

17. Dispositif de fabrication selon l'une des revendications 13 à 16, **caractérisé en ce que** la riveteuse (2) possède une unité de positionnement (2a) pourvue d'un effecteur terminal (2b) muni d'un outil de rivetage, de préférence **en ce que** l'effecteur terminal (2b) possède un outil de perçage et un outil de rivetage.

18. Dispositif de fabrication selon l'une des revendications 13 à 17, **caractérisé en ce que** l'unité de mise à disposition d'éléments de rivetage (5) est fixée à la riveteuse (2) ou **en ce que** l'unité de mise à disposition d'éléments de rivetage (5) est installée séparément de la riveteuse (2).

19. Dispositif de fabrication selon l'une des revendications 13 à 18, **caractérisé en ce que** l'arrangement d'accueil d'éléments de rivetage est fixé à la riveteuse, de préférence **en ce que** l'arrangement d'accueil d'éléments de rivetage (6) est fixé à une partie fixe de la riveteuse (2).
